# EUROPEAN PATENT SPECIFICATION

(11) **EP 4 080 388 B1**
(45) Date of publication and mention of the grant of the patent: **09.09.2026**
(21) Application number: 22168679.3
(22) Date of filing: 15.04.2022
(51) Int. Cl.: G06F 21/32, G06V 10/82, G06V 20/20, G06V 40/16, G06N 3/0442, G06N 3/0464, G06N 3/09, G06N 3/096, G06N 3/098

(54) **MULTIMODAL, DYNAMIC, PRIVACY PRESERVING AGE AND ATTRIBUTE ESTIMATION AND LEARNING METHODS AND SYSTEMS**
MULTIMODALE DYNAMISCHE ALTERS- UND ATTRIBUTSCHÄTZUNG UND LERNVERFAHREN UND -SYSTEME MIT WAHRUNG DER PRIVATSPHÄRE
PROCÉDÉS ET SYSTÈMES D'APPRENTISSAGE ET D'ESTIMATION DE L'ÂGE ET DES ATTRIBUTS MULTIMODAUX, DYNAMIQUES ET PRÉSERVANT LA CONFIDENTIALITÉ

(30) Priority: 19.04.2021 EP 21169249
(43) Date of publication of application: 26.10.2022
(73) Proprietor: Privately SA, 1015 Lausanne Vaud (CH)
(72) Inventor: Tewari, Deepak, 1015 Lausanne Vaud (CH); Monney, Matthieu, 1015 Lausanne Vaud (CH)
(74) Representative: Wenger, Joel-Théophile

(56) References cited:
- US-A1- 2019 258 878
- US-A1- 2021 082 136
- US-B1- 8 498 491

## Description

### Field

This specification relates to cost-effective user age, gender and attribute estimation in interactive communication networks, user management and user privacy enforcement on services such as social media, games, virtual reality environments, mobile apps as well as on bringing 'age-awareness' to personal computing devices.

### Background

One in three users of the internet is under 18 years old yet most Internet services have not been designed with children in mind. The proliferation of smartphones and other personal electronic devices among young users and consequent use of internet services among minors has reached unprecedented levels over the last year of COVID lockdowns owing to education and socializing moving almost completely online. In addition - rapid development in immersive virtual reality environments such as the Metaverse creates newer challenges. The subject of ensuring the safety and wellbeing of children online and more generally in interactive media experience is the matter of primary concern among stakeholders- government, schools, parents and tech companies alike. While legislation such as Online Harms Bill and Age Appropriate Design code in the UK , California Age-Appropriate Design Code Act and changes to COPAA proposed in the US, Online Safety Act in Australia, which places this duty of care responsibility on platforms is slowly catching up- one of the biggest challenges faced by the industry is how to age-gate their services to have age-appropriate experiences for their users. It is difficult for platforms and technology providers to protect minors online and/or in virtual environments without really knowing which of their users are actually minors. Current measures of self-declaration of age are known to be inadequate as users often lie about their age to access a service. Verified parental consent has traditionally been one of the ways in which parents are asked to consent to the use of some services on behalf of their minor children.

For most internet-based services which typically have all age ranges of users, the determination of user age is mostly done through self-declaration or parental consent mechanisms at the time of onboarding onto the service. This setting is typically predetermined and manually setup by the user device owner, and it does not automatically adapt to the actual user of the device. Given that minors often misrepresent their true age online, this might have consequences for example that a minor is exposed to advertising or other user environments and content inappropriate for their age because of false age declaration. As an example, 75% of 12-year olds in the UK use Instagram while the minimum age to use it is 13 years. At the same time, it is cumbersome for platforms to ask users for hard identity proof like a passport to access a free chat application for example. In addition most regulatory regimes prevent online services from retaining , processing and sharing children's personal data.

Inappropriate use may be detected on the server side by using some monitoring services. In China, Tencent has applied a facial recognition system in games to identify minors. Such a system would not comply with GDPR and e-privacy regulations in Europe. Recently TikTok has rolled out an additional self-declaration age form in response to adverse incidents in Italy. Some companies like Yoti are offering a certificate of age based on the combination of physical /documental verification and more advanced age estimation based on machine learning. WO20104542 describes an age estimator which uses a facial feature extractor and a voice feature extractor as inputs to a convolutional neural network. In many of these mechanisms user data and voice features are collected and sent for processing to a central server and therefore poses a threat to end-user privacy because of the risk of misuse.

One challenge to improve age estimation /verification is to train accurate classifiers based on Machine Learning (ML) which requires large amounts of data samples from minors. Unfortunately, this kind of user data is very privacy sensitive and thus often impossible to obtain, ruling out existing centralized machine learning training datasets for legal and privacy reasons (such as GDPR).

A second challenge is the costs associated with running machine based age estimations at scale using centralised computing resources.

There is therefore a gap in the market in terms of a practical and reliable machine-learning mechanism for age estimation - that can both operate and train/improve in a privacy preserving and cost effective manner.

Deep learning (DL) based age verification (AV) and age estimation (AE) has recently gained more attention from researchers with promising results. Most of the approaches are image-based, pre-trained face recognition (FR) models, e.g. VGGFace [Parkhi, 2015], are fine-tuned such as DeepAge [Sendik, 2019], LSTM-based methods [Zhang, 2019] and regression-based approaches [Niu, 2016] on specific face datasets with age information (FG-Net, MORPH-II). Another related problem is apparent AE, which aims to detect age based on how old the subjects appear to human observers [Antipov, 2016]. The authors fused ensembles of pre- trained FR models tuned on the IMDB-Wiki dataset [Rothe, 2016]. The reported accuracy of face AV is 88% around 13 years and 89% around 18 years. In the audio domain, previous approaches to AE were mostly based on tuning i-vectors [Bahari, 2018] [Sadjadi, 2016], the state of the art methods originally developed for speaker recognition (SR). However, the recent improvements in SR accuracy of DNN-based x-vectors compared to i-vectors called for applying the same DL approach to the AV task [Ghahremani, 2018; Zazo, 2018]. X-vectors can also be pre-trained on large SR datasets such as VoxCeleb or VoxCeleb2 [Chung, 2018] and then tuned on the smaller datasets with speakers' age information (NIST SRE). The reported accuracy of voice AV is 80% around 13 years and 55% around 18 years.

However, historically , there has been a lack of research on AV that would use both audio and visual modalities. In the related domain of kinship verification (an automated verification of the relation between parents and kids), the fusion-based [Lopez, 2018] and Siamese network based [Wu, 2019] approaches that rely on x-vectors for voice domain and VGG-based networks for face domain are mostly prevalent. None of the current methods for AV are taking into account implications of privacy and ethical aspects of verifying the ages of minors. The difficulty of collecting the data for minors is also one of the main reasons why there are a limited number of publicly available datasets for training and evaluating the systems.

Beyond audio and video modalities, age prediction from user-written text has been performed extensively in the recent NLP literature [Peersman, 2011; Morgan-Lopez 2017], and also in public competitions [Rangel 2018], which demonstrated multimodal prediction of age and gender of authors, based on text & images posted on social media. Such tasks do enable benchmarking of multimodal approaches. On the text side, the current state of the art leverages attention-based neural network models, delivering contextual word and document embeddings [Devlin 2018].

Many of the problems highlighted above would be addressed through improved systems and methods to estimate the age range from the user of a device on an interactive communication session automatically and dynamically per session. Such dynamic estimation of the age range and other attributes from the user of a device application using local, privacy-preserving processing means that for each session- user is granted access to an age-appropriate version of the service after such an age label is sent to the server application. The age label is automatically determined by locally checking certain attributes from the user, solely using the content fed by the user into the interactive application client on the local device. Services which rely on advertising might specially be able to dynamically relay appropriate advertising in response to sensing the age of the user during a session. In addition, there is a further need for continuous improvement of machine learning models using multiple content modalities.

The document US 2021/0082136 discloses a training method of an image processing system to discriminate human faces from fake images. An image processing component is trained to process 2D images of human body parts, in order to extract depth information about the human body parts captured therein. Image processing parameters are learned during the training from a training set of captured 3D training images, each 3D training image of a human body part and captured using 3D image capture equipment and comprising 2D image data and corresponding depth data, by: processing the 2D image data of each 3D training image according to the image processing parameters, so as to compute an image processing output for comparison with the corresponding depth data of that 3D image, and adapting the image processing parameters in order to match the image processing outputs to the corresponding depth data, thereby training the image processing component to extract depth information from 2D images of human body parts.

### Summary

Disclosed herein is a method to estimate on a client device an attribute of a user of the client device, the client device comprising at least one processor, a local storage memory, a network connection interface to a remote server, and at least two user interaction components among an audio sensor component, a camera sensor component, a haptic sensor component, a touch-sensitive screen component, a mouse component and a keyboard interface component, said method comprising:
- Requesting, with the processor through the network connection interface to the remote server, the opening of a communication session between a local interactive application client and a remote server application;
- Receiving, from the remote server application, a request for an attribute label of the device user;
- Sending, to the remote server application, a previous local estimate Lₚᵣₑᵥ of the attribute label of the device user;
- Receiving, from the remote server application, a request for updating the attribute label estimate of the device user during the communication session;
- Capturing a first local signal sample and a second local signal sample of the user-generated content from at least two of the user interaction components, the two local signal samples been selected as two different signal modalities among: from the audio sensor data stream, an audio signal sample, an audio background signal sample, or a user voice signal sample; from the camera sensor data stream, an image sample, a video signal sample, a video background signal sample, a user face video sample, a user body video sample, or a user hand motion pattern sample; from the haptic sensor data stream, a device position, a device orientation, a device motion or a device acceleration sample; from the touch-sensitive screen interface, a user text input sample, a user drawing sample, a finger haptic motion pattern sample; from the mouse, a user drawing sample or a mouse motion and command pattern sample; from the keyboard, a user text input sample or a user typing pattern sample;
- Predicting from the first local signal sample, with a first neural network (NN1) a first label estimate L₁ for the user attribute and a first confidence score measurement S₁;
- Predicting from the second local signal sample, with a second neural network (NN2) a second label estimate L₂ for the user attribute and a second confidence score S₂ measurement;
- Updating the user attribute label estimate L*_{curr}* as a function of the L₁ label estimate, the L₂ label estimate, the first confidence score measurement S₁ and the second confidence score S₂ measurement.

In a possible embodiment, predicting from a signal sample a label estimate and a confidence score measurement may comprise:
- pre-processing the signal sample into subsamples;
- predicting, with a classifier, a label estimate and a confidence score for the estimated label for each subsample *i*;
- calculating a composite label estimate as the most frequently detected label among the subsamples;
- calculating an aggregated confidence score as the average of confidence levels for the series of subsample estimate values;
- recording the composite label estimate and the aggregated confidence score in local memory.

In a possible embodiment, the composite label estimate may be calculated as the statistical MODE or the mean of the series of subsample label estimates. In a further possible embodiment, the composite label estimate may be calculated as the statistical MODE or the mean of the series of subsample label estimates with a confidence score above a threshold of confidence in the series of subsample estimate values. In a further possible embodiment, the rejected subsamples for which the label estimates resulted in a confidence score below a threshold of confidence S₁ₘᵢₙ may be recorded in memory as a data set for later local re-training.

In a possible embodiment, the user attribute label estimate L*_{curr}* may be updated as the label estimate for the modality with the highest confidence score. In a further possible embodiment, the user attribute label estimate L*_{curr}* may be updated as the label estimate for the modality with the highest confidence score only if this confidence score is above a predefined threshold, or if the average of the composite confidence scores across all modalities is above a predefined threshold. The updated user attribute label estimate L*_{curr}* may be recorded in local memory and/or sent to the local application client.

In a further possible embodiment, the method may comprise re-training a first modality machine learning classifier with the rejected subsamples from this first modality by using the local second modality label estimate L₂ as ground truth label if the aggregated confidence level S₂ is greater than a predetermined threshold *minS₂,* to produce an updated tensor T₁ as the training parameters for the first modality machine learning classifier. The method may further comprise re-training a second modality machine learning classifier with the rejected subsamples from this second modality by using the local first modality label estimate L₁ as ground truth label if the aggregated confidence level S₁ is greater than a predetermined threshold *minS₁,* to produce an updated tensor T₂ as the training parameters for the second modality machine learning classifier. The method may further comprise, for each modality, sending the updated tensor to a federated learning aggregator for this modality on a remote server. The method may further comprise receiving an aggregated updated tensor from the federated learning aggregator and updating the machine learning classifier for this modality with the aggregated updated tensor.

### Brief description of the drawings

FIG. 1 shows a prior art interactive communication system comprising two user devices exchanging information such as video, pictures, text, sound or voice data from their respective local software client applications running on the user device, through a server application hosted on a remote IT infrastructure, using a communication network such as the internet.
FIG. 2 is an interactive communication system comprising a user attribute estimator according to some embodiments of the present disclosure.
FIG. 3 illustrates a possible user attribute estimator according to some embodiments of the present disclosure, comprising a set of machine learning engines for each information signal modality on the client device to estimate and adjust the user attribute label out from live samples from each modality on a session per session basis.
FIG. 4 is a flow diagram of an example process for estimating and locally updating the user label in an interactive session according to some embodiments of the present disclosure.
FIG. 5 illustrates a possible automated machine learning training update system using a federated learning architecture according to some embodiments of the present disclosure.
FIG. 6 is a flow diagram of an example process for improving the estimation of the user attribute estimation over time throughout multiple client devices using a federated learning workflow according to some embodiments of the present disclosure.

### Detailed description

This specification generally describes an interactive software monitoring system that analyses content data and related context information from an interactive software communication session. Preferably, an interactive software application manages a communication session between a local user device, such as for instance a personal computer, a smartphone, a tablet, an interactive television, a set-top-box, a gaming console such as the Xbox, Wii, or PS5, a virtual reality headset such as Oculus Quest, Valve Index, Sony Play station VR or HP Reverb, or in general any multimedia user device in connection with other user devices and/or application servers through a communication network such as internet.

The interactive software application may be for instance a social network application such as Facebook, Twitter, Instagram, Snapchat, Whatsapp, TikTok, Telegram, Signal, Discord, all the communication means present natively on phones such as Facetime, or in general any social network application dealing with user generated content data in an interactive context.

The interactive software application may also be for instance a VR (virtual reality ) application like Horizon worlds, an online gaming application such as Minecraft, World of Warcraft, Call of Duty, Fortnite, or in general any application that facilitates massively multiplayer online role-playing gaming (MMORPG), dealing with user generated content data in an interactive context.

The interactive software application may also be for instance a video conferencing tool, a chat tool, an educational tool suitable for online classes teaching and training, a peer-to-peer application, and in general any interactive application dealing with locally generated user content data which is synchronously or asynchronously shared with a remote application and/or remote users in an interactive context.

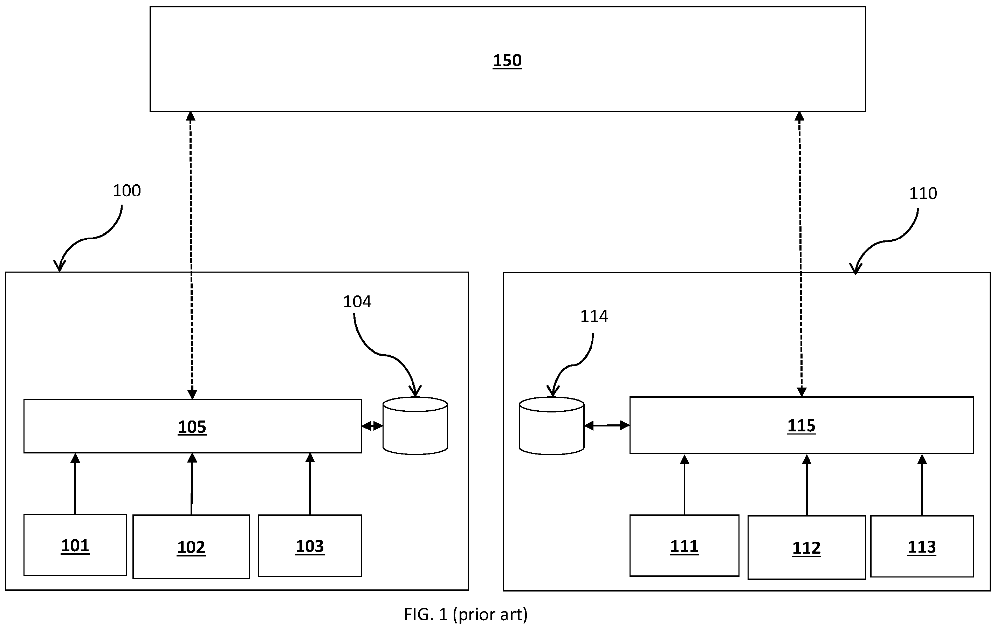

FIG.1 shows a prior art interactive communication system comprising two client devices 100, 110. which may be engaged in an interactive communication session through a communication network such as the Internet. The user of device 100 runs a client application 105 on his/her device to communicate multimedia content with the client application 115 which may be ran by the user of device 110 at the same time (live interaction session) or at a later time (uploaded content), usually under control by a server application 150 remotely hosted in the network (e.g. in a cloud farm). Similarly, the user of device 110 may run the client application 115 on his/her device to communicate multimedia content with the client application 105 which may be ran by the user of device 100 at the same time (live interaction session) or at a later time (uploaded content), under control by the server application 150. The multimedia content may comprise at least one modality out of multiple different possible interactive session content modalities, such as:
- an audio stream captured from the microphone sensor 101 on device 100, 111 on device 110;
- a video stream or an image captured from the camera sensor 102 on device 100, 112 on device 110;
- a text stream captured from a hardware keyboard, a virtual keyboard on a touch screen or a speech-to-text component 103 on device 100, 113 on device 119;
- and/or a device position, orientation, motion, acceleration haptic data stream captured from a haptic sensor on device 100 or on device 110 (not represented).

The client application 105, 115 may retrieve and verify a 'parental control' or 'self-declared' age label stored in the memory 104, 114 of the client device 100, 110 before granting access to the interactive session under supervision by the server application 150. As a secondary control, the server application 150 may also monitor and analyse the content produced by the user of device 100, 110 through the interactive session. However, the latter analysis may not be possible or even lawful, in particular when national user data privacy protection regulations require the application to apply end-to-end encryption from the user of device 100 to his/her personal contact, that is the user of the device 110. In the latter case, the whole child protection enforcement thus relies upon a local setting, such as the end user declaration of his/her age attribute when installing the app, or the parental control age range as may be stored in the user device 100, 110 user settings memory 104, 114.

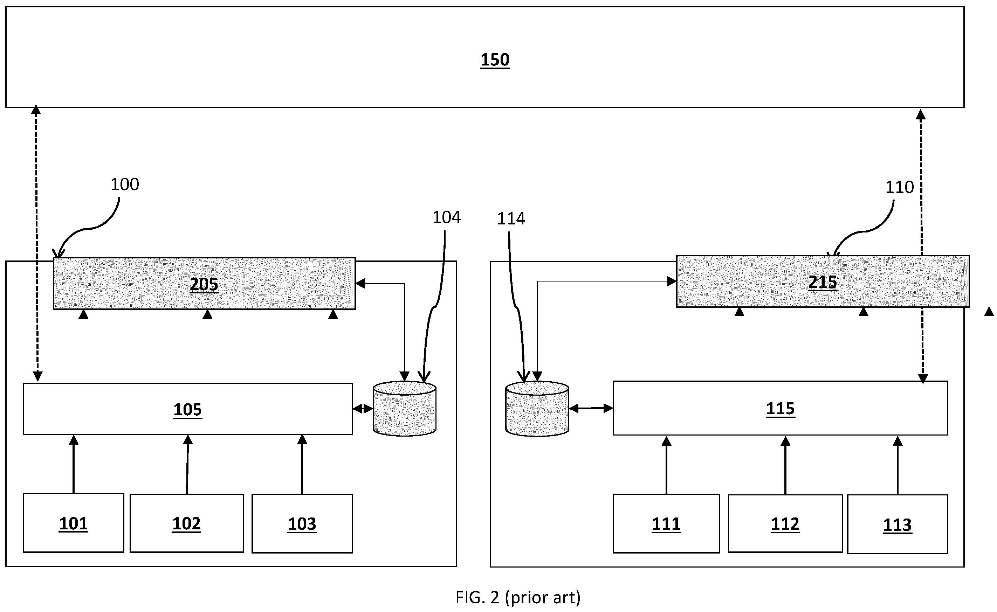

FIG. 2 shows an improvement over the prior art interactive communication system, which may be adapted to implement a local age estimator 205, 215 in the user device 100, 110 so as to update the user age label parameter in the local memory 104, 114 based on the local analysis of samples of the user content feeds from the client application 105, 115. Preferably, the local age estimator 205, 215 operates solely on the client device, without requiring any content exchange with the server application 150, so as to be compliant with user privacy regulations such as GDPR. In a possible embodiment, the local age estimator 205, 215 may employ a machine learning classifier operating on a video feed with a facial extractor and a voice extractor, as described for instance in WO20104542, but other, alternative embodiments more suitable to local age estimation and machine learning processing are also possible as will now be described in further detail.

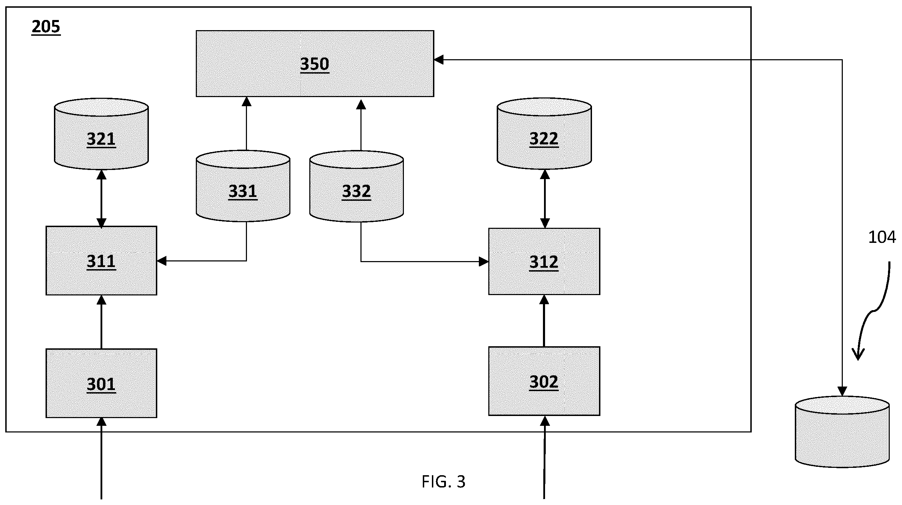

FIG. 3 shows a possible embodiment of a local age estimator 205 which may use at least two separate machine learning classifiers 311, 312, each classifier being devoted to a given modality. In a preferred embodiment, each machine classifier component 311, 312 may be any of a convolutional neural network, a gated recurrent neural network, a transformer model, a long-short-term memory (LSTM) model, or more generally any machine learning multi-layered network model. Such a machine learning model may be architected as a series of interconnected signal processing layers and trained with a set of parameters for each layer to associate, to a data sample fed into the input layer, a classification label output and a confidence score for this output classification label at the output of the final layer. As will be apparent to those skilled in the art of deep learning, the set of training parameters for a machine learning classifier 311, 312 may be stored in local storage 321, 322 as a tensor, that is a multidimensional array of mathematical values.

In a possible embodiment, the age estimator module 205 may receive from the client application (not represented) one or more user-generated video sample of a predefined length (for instance 10 seconds, 20 seconds 1 minute, 2 minutes, 3 minutes, 4 minutes, 5 minutes, or a shorter video extract or a longer video clip). The age estimator module may extract, with a video signal pre-processor 301, a series of *mₚ* facial pictures from the device user. As will be apparent to those skilled in the art of image processing, the video signal-processor 301 may extract individual frames from the video and may employ different facial extraction methods to detect a face in the captured image frames to prepare them for classification, for instance by compensating for rotation and/or scaling based on finding the eyes and their alignment, and further cropping the detected face image accordingly. Each facial picture *P₁, P₂*, ... *Pmₚ* may be separately fed into the classifier 311 trained with a predefined set parameters Tₚ stored on the local memory 321 to produce an age label estimate Lₚ(*P₁*), Lₚ(*P₂*),..., Lₚ(*Pmₚ*) for each facial picture with the corresponding confidence score sₚ(*P₁*), sₚ(*P₂*),..., sₚ(*Pmₚ*).

In a possible embodiment, the age estimator module 205 may receive from the client application (not represented) a user-generated video sample of a predefined length (for instance 10 seconds, 20 seconds 1 minute, 2 minutes, 3 minutes, 4 minutes, 5 minutes, or a shorter video extract or a longer video clip) and may extract, with a speech signal pre-processor 302, a series of *mᵥ* voice extracts from the device user. As will be apparent to those skilled in the art of speech processing, the audio signal-processor 302 may apply various audio processing methods to prepare a speech extract for classification, such as audio signal normalization, silence removal, background noise removal, and/or more generally any voice denoising method. Each resulting pre-processed voice extract *V₁, V₂,* ... *Vₘᵥ* may be separately fed into the classifier 312 trained with a predefined set parameters Tᵥ stored on the local memory 322 to produce an age label estimate Lᵥ(*V₁*), Lᵥ(*V₂*),..., Lᵥ(*Vₘᵥ*) for each voice extract with the corresponding confidence score sᵥ(*V₁*), sᵥ(*V₂*),..., sᵥ(*Vₘᵥ*).

In a possible embodiment, the age estimator module 205 may receive from the client application (not represented) a set of user-generated pictures (for instance selfies) and may extract, with an image signal pre-processor 301, a series of *mₚ* facial pictures *P₁, P₂, ... Pmₚ* from the device user. As will be apparent to those skilled in the art of image processing, the image signal-processor 301 may employ different facial extraction methods to detect a face in the captured image samples and prepare it for classification, for instance by compensating for rotation and/or scaling based on finding the eyes and their alignment, and further cropping the detected face image accordingly. Each resulting pre-processed face image may be separately fed into the image classifier 311 trained with the predefined set parameters Tₚ stored on the local memory 321 to produce an age label estimate Lₚ(*P₁*), Lₚ(*P₂*),..., Lₚ(*Pmₚ*) for each facial picture with the corresponding confidence score sₚ(*P₁*), sₚ(*P₂*),..., sₚ(*Pmₚ*).

In a possible embodiment, the age estimator module 205 may receive from the client application (not represented) a set of user-generated microphone recordings (for instance voice messages) and may extract, with an audio signal pre-processor 302, a series of *mᵥ* voice extracts *V₁, V₂,*... *Vₘᵥ* from the device user. Each voice extract may be separately fed into the voice classifier 312 trained with a predefined set parameters Tᵥ stored on the local memory 322 to produce an age label estimate for each voice extract with the corresponding confidence score sᵥ(*V₁*), sᵥ(*V₂*),..., sᵥ(*Vₘᵥ*).

In a possible embodiment, the age estimator module 205 may receive from the client application (not represented) a set of user-generated text data (for instance chat messages) and may identify the language and extract, with a natural language text pre-processor (not represented), a series of text extracts as a series of *m_{w}* words *W₁, W₂*, ... *W_{mw}* from the device user. Each series of words may be separately fed into the text classifier 312 trained with a predefined set parameters T_{w} stored on the local memory (not represented) to produce an age label estimate L_{w} for each text extract with the corresponding confidence score s_{w}.

In a possible embodiment, the age estimator module 205 may receive from the client application (not represented) a set of user-generated haptic data (for instance device position, orientation, motion and/or acceleration measurements) and may extract, with a haptic signal pre-processor (not represented), a series of *mₕ* haptic signatures *H₁, H₂, ... Hₘₕ* of the device user. Each haptic signature may be separately fed into the text classifier 312 trained with a predefined set parameters Tₕ stored on the local memory (not represented) to produce an age label estimate Lₕ(*H₁*), Lₕ(*H₂*),..., Lₕ(*Hmₚ*) for each haptic signature with the corresponding confidence score sₕ(*H₁*), sₕ(*H₂*),..., sₕ(*Hₘᵥ*). In a possible embodiment, the haptic data is received from a haptic sensor. The haptic sensor may detect a user gesture, for instance using a gyroscope, an accelerometer, a GPS, a motion sensor, a position sensor, an orientation sensor, a combined (6DOF) position and orientation sensor, or other sensors capable of detecting position, orientation, motion or acceleration of the user device. The haptic sensor may be integrated into the user device or may be separate from the user device but operating in association with the user device. In a possible embodiment, the position sensor may comprise a NFC sensor to estimate the proximity of the user device to a tagged object in accordance with the NFC technology. In another possible embodiment, for instance in a virtual reality gaming room setup, the haptic sensor may comprise a camera to track the position of the user device or a motion detector to detect the motion of the user device in the room. Other embodiments are also possible.

In a possible embodiment, the signal pre-processor may sort out subsamples which do not have the required quality to be fed into the classifier, such as for instance images without a detected face, with a too small detected face or with too many detected faces, and/or if the resulting pre-processed detected face image has too low resolution; audio subsamples in which no speech or not enough speech data could be detected, or with too much background noise, and/or if the resulting pre-processed voice extract remains too noisy for proper classification; or texts which are too short to be processed, which do not contain enough characters (for instance if emojis are removed) or from which it is not possible to identify the language.

More generally, the age estimator module 205 may receive from the client application (not represented) one or more samples from the user generated content for at least two of the content modalities (audio, speech, video, pictures, natural language text, haptic measurements) to be communicated during the interactive session by the local client application to a remote client application and/or a remote server application. Subsequent samples may also be sent from the client application to the age estimator module at a different time, for instance at predefined regular time intervals (for instance, a 1s sample every 10s in the live interactive session), or upon request by the age estimator module (for instance, to replace a sample that did produce enough subsamples to properly feed the classifier, or for which the classifier produces a confidence score below a predetermined minimum threshold of classification validation), or upon request by the server application based on predefined parameters or the advent of certain triggering events along the interactive session communication.

From each sample of the first modality, the age estimator module 205 may extract, with a signal pre-processor 301 adapted to pre-process the first signal modality, a first series of subsamples characterizing the device user on this first modality. In a possible embodiment, each subsample may be represented as a feature vector, but other data representations are also possible in accordance with the specifications of the machine learning classifier 311 for the first modality. Each resulting pre-processed subsample may be separately fed into a dedicated classifier 311 for this sample signal modality, trained with a predefined tensor set of deep learning parameters T₁ stored on the local memory 321, to produce an age label estimate for each subsample with the corresponding confidence score. The age estimator module 205 may then store the resulting first set of age label estimates and matching confidence scores for the first signal modality of the input sample in local memory 331.

For each sample of the second modality, the age estimator module 205 may also extract, with a signal pre-processor 302 adapted to pre-process the second signal modality, a second series of subsamples characterizing the device user on this second modality. In a possible embodiment, each subsample may be represented as a feature vector, but other data representations are also possible in accordance with the specifications of the machine learning classifier 312 for the second modality. Each resulting pre-processed subsample may be separately fed into a dedicated classifier 312 for this sample signal modality, trained with a predefined tensor set of deep learning parameters T₂ stored on the local memory 322, to produce an age label estimate for each subsample with the corresponding confidence score. The age estimator module 205 may store the resulting second set of age label estimates and matching confidence scores for the second signal modality of the input sample in local memory 332.

In a preferred embodiment, the age estimator module may then further process the first set of age label estimates and the second set of age label estimates with a Multimodal Adaptive Label Estimator Logic (MALEL) 350 to predict, update and record in local memory 104 a multimodal age estimate label for the user of the device as automatically measured from one or more samples of the user-generated content on at least two multimedia modalities during the client application interactive session. The client application may thus refer to this updated age label estimate to adapt the interactive session to the estimated age label - for instance, it may prevent the transmission of the user-generated content to a remote server or client application in accordance with the estimated age label. In the case of a child age range label, the client application may prevent the transmission of the user-generated content out of the local device, or enable it to be transmitted only to remote applications which are certified as child-friendly. Conversely, in the case of a 18+ adult label, the client application may prevent the transmission of the user-generated content to remote applications which are reserved for children use.

In a possible embodiment, the local memory 104 may be specific to the client application 105. In an alternate embodiment, the local memory may be shared by different client applications running on the same client device 100, so that each of them benefits from their respective age label estimate updates. In a possible embodiment, the age label estimate may be recorded in a secure storage area on the device, in order to prevent its unauthorized modification by the user of the device, under the control of the local age estimator 205, preferably running in a trusted execution environment (TEE). The local age estimator 205 may then retrieve a former age estimate from the secure storage area on the device and serve it upon request by the client application 105. An example would be a mobile browser checking for such a label on the phone when an 18+ website or service is accessed, or alternately, an advertising service or cookie requesting for such a label before showing a restricted advert to a user.

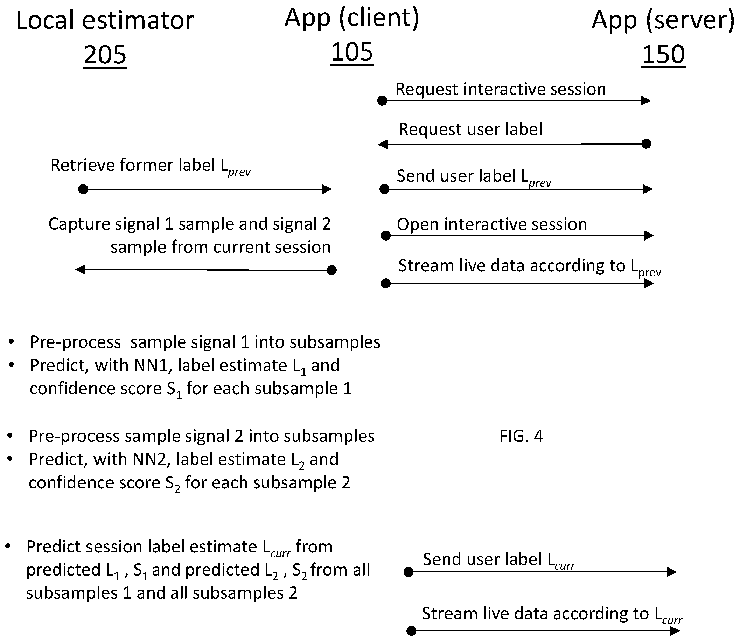

FIG. 4 illustrates a workflow of an exemplary embodiment of the communication between a local estimator 205, a local application client 105, and a remote application server 150. When the user starts an interactive use of the application, the application client 105 requests the opening of an interactive session with the remote application server 150. The remote application server requests the user age label from the client application 105. The client application 105 retrieves the former age estimate label Lₚᵣₑᵥ from the local memory 104, sends it to the app server 150, and opens the interactive session in accordance with the former age estimate label Lₚᵣₑᵥ value credentials. The client application 105 starts capturing user generated content on at least two modalities, prepares and sends to the local estimator 205 one or more samples out from this capture: signal 1 sample and signal 2 sample. These signal samples may comprise an audio modality sample as signal 1 and moving pictures as video modality signal 2 out of a multiplex A/V stream sample captured from the device camera sensor or from a former video recording of the device camera sensor on the local device; or they may comprise multiple separately generated sample signals such as a voice memo sample captured from the device microphone, a selfie or a video sample captured from the device camera, a natural language text sample captured from the device keyboard or touchscreen, a haptic measurement sample captured from the device sensors, or a combination thereof.

The local estimator 205 may then pre-process, with the first pre-processor 301, sample signal 1 into subsamples, and predict, with the first classifier 311, a label estimate L₁(*i*) and a confidence score for the estimated label s₁(*i*) for each subsample *i.* In a possible embodiment, the local estimator logic module 350 may calculate the first modality composite age estimate L₁ as the most frequently detected age label L₁ for the first modality, for instance calculated as the statistical MODE or the mean of the series of subsample label estimates L₁(*i*) values, and record it in local memory 331. In a possible embodiment, the local estimator logic module 350 may only consider the subsample label estimates with a confidence s₁(*i*) above a threshold of confidence s₁(*i*) > S₁ₘᵢₙ in the series of subsample estimate values. The local estimator logic module 350 may calculate an aggregated confidence score S₁ for the first modality as the average of confidence levels for the series of subsample estimate values and record it in local memory 331. In a possible embodiment, the local estimator logic module 350 may record in local memory 331 the rejected subsamples which resulted in a confidence score s₁(*i*) below the threshold of confidence S₁ₘᵢₙ. These rejected subsamples may be used for later re-training of the classifier 311.

The local estimator 205 may also pre-process, with the second pre-processor 302, sample signal 2 into subsamples, and predict, with the second classifier 312, a label estimate L₂(*j*) and a confidence score for the estimated label s₂(*j*) for each subsample *j.* In a possible embodiment, the local estimator logic module 350 may calculate the second modality composite age estimate L₂ as the most frequently detected age label L₂ for the first modality, for instance calculated as the statistical MODE or the mean of the series of subsample label estimates L₂(*j*) values, and record it in local memory 332. In a possible embodiment, the local estimator logic module 350 may only consider the subsample label estimates with a confidence s₂(*j*) above a threshold of confidence s₂(*j*) > S₂ₘᵢₙ in the series of subsample estimate values. The local estimator logic module 350 may calculate an aggregated confidence score S₂ for the second modality as the average of confidence levels for the series of subsample estimate values and record it in local memory 332. In a possible embodiment, the local estimator logic module 350 may record in local memory 332 the rejected subsamples which resulted in a confidence score s₂(*j*) below the threshold of confidence S₂ₘᵢₙ. These rejected subsamples may be used for later re-training of the classifier 312.

The local estimator 205 may then predict the multimodal composite label estimate L*_{curr}* as a function from the first modality composite age estimate L₁ and its aggregated confidence level S₁, and from the second modality composite age estimate L₂ and its aggregated confidence level S₂.

In a possible embodiment, the local estimator 205 may predict and record in memory 104 the multimodal composite label estimate L*_{curr}* as the most reliable modality composite age estimate: if S₂ >S₁ L*_{cur}* = L₂, else L*_{cur}* = L₁. In a possible embodiment, the local estimator 205 may record in local memory 104 (not represented) and/or send to the local application client 105 the updated multimodal composite label estimate L*_{curr}* if and only if the greatest multimodal label estimation confidence score S*_{curr}=max(*S₁ ,S₂) is above a predefined threshold. In an alternate possible embodiment, the local estimator 205 may also calculate a multimodal label estimation confidence score *S_{curr}* as the average of the composite confidence scores S₁, S₂ across all modalities. In a possible embodiment, the local estimator 205 may record in local memory 104 (not represented) and/or send to the local application client 105 the updated multimodal composite label estimate L*_{curr}* if and only if the multimodal label estimation confidence score S*_{curr}* is above a predefined threshold.

In a possible further embodiment, when multiple samples are available for processing by the local estimator 205 within a given interactive session, or through multiple interactive sessions, possibly from different client applications used on the local device by the device user, the local estimator 205 may also further refine the current estimation of the age label based on the history of former estimations. In a possible embodiment, a historical multimodal composite label estimate L*ₕᵢₛₜ* may be estimated based on a series of the last *n* estimations of L*_{curr}*, for instance as the statistical MODE value over this series, or a simple majority vote, or by a weighted average using the multimodal label estimation confidence scores S*_{curr},* or using any other heuristics such as the temporal information of when the session sample was recorded, or the spatial information of which client application provided the sample, or the self-declared label to be checked, or a combination thereof.

The local application client 105 may adapt the processing of the interactive session in accordance with the updated age estimate label L*_{curr}* value credentials, for instance by enabling the transmission of the user-generated content to the remote server application 150 if and only if the updated age estimate label L*_{curr}* value credentials authorize it.

In a further embodiment, the above proposed systems and methods may be improved by adapting the multimodal machine learning classifiers with federated learning systems and methods. Indeed, most of the age verification (AV) studies focus on estimating age from either faces or speech in general purpose image or voice databases, which mainly contain adult subjects of ages in twenties or thirties. The biggest challenge for conducting the research in AV, especially for minors, is the limited number of publicly available audio-visual data of children with age information. Ethical and privacy concerns prevent the collection of children's data, and therefore, any research in this domain needs to overcome this problem and propose training and modelling techniques that would be able to accurately and securely estimate a person's age under the strict limit of available training data.

Scalable decentralized training of machine learning models has received great interest in recent research. Such methods are of core importance for enabling privacy-preserving machine-learning (for example mobile phones, or different hospitals), without the need of a central coordinator. A key property here is that the training data contributed by the user-generated content will remain on the user's local device during training, instead of being transmitted or shared with a server. Interestingly, the same type of training algorithms is useful beyond the privacy interest, and also currently delivers state-of-the-art performance in scalable training in modern computing clusters. As a special case of decentralized learning, the federated learning setting [Konečný 2016] covers collaborative learning in a star-shaped communication topology with the help of a central coordinator, while also maintaining training data locality on each user device.

In order for the machine learning classifiers to operate under the limited ground truth data is to employ deep-learning based model adaptation techniques. For instance, each machine learning multi-layered network model 311, 312 models may be independently pre-trained on larger face datasets for general public age estimation, and initially deployed (installed) onto the user devices 100, 110 with a preset tensor of trained parameters, e.g. T₁ recorded in local memory 321 for the first modality model 311, T₂ recorded in local memory 322 for the second modality model 312, etc. In a possible embodiment, each model 311, 312 may be later adapted on a small number of samples available from the locally generated user content. The specific adaptation techniques can include (i) tuning and/or fine-tuning some or all layers of the model, (ii) training the classifier using a pre-trained model as a feature extractor, or even (iii) even training and adding newly added layers to the existing model.

As will be apparent to those skilled in the art of machine learning, a run-time training adaptation still requires the use of properly labelled data (ground truth) in the supervised learning process, which is particularly challenging in our architecture as it may not be possible, for legal reasons, to receive training data on the local devices 100, 110. To address this limitation, in a possible further embodiment, co-learning techniques for training multimodal systems may be used to improve the accuracy of a model trained for one modality by locally transferring the knowledge from another modality without the need to transmit or share the training data with another service or device. For instance, it may be possible to train a full body image or video classifier to learn on recognizing a child from the age label estimate computed from another modality classifier, such as a facial picture classifier or a voice classifier, provided that the age label estimate label for this modality resulted in a good-enough confidence score. Thus, the proposed multimodal system can be flexible to the modality and the type of data available during training or tuning run-time. In particular, using co-learning techniques, the joint model may be adapted in real time to either visual, voice, or textual data stream or any of their available combinations.

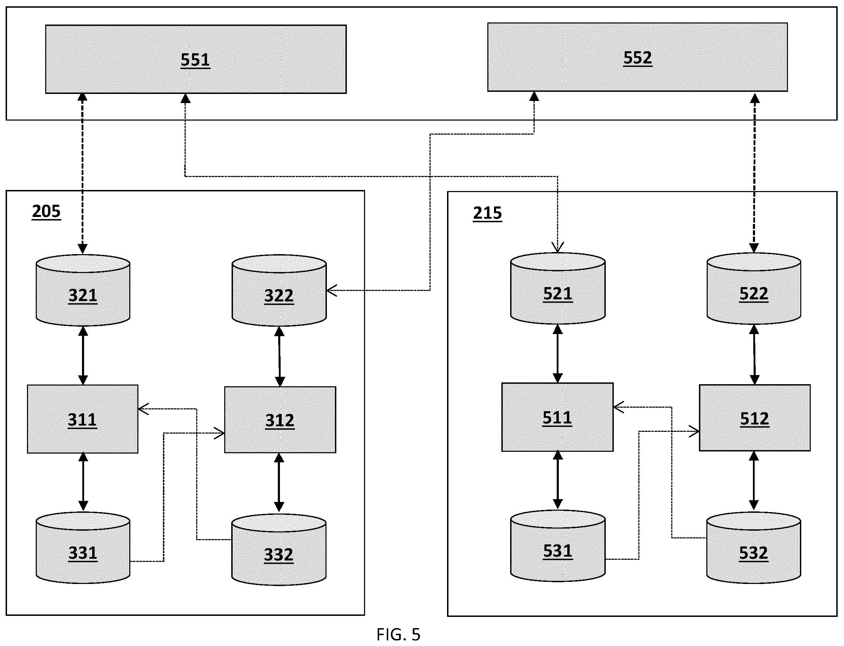

FIG. 5 illustrates a possible embodiment of a federated learning system comprising a first age estimator module 205 installed and running on a first user edge device 100 (not represented), a second age estimator module 215 installed and running on a second user edge device 110 (not represented). Both age estimator modules 205, 215 comprise two or more machine learning classifiers, each trained to classify user-generated content on a dedicated modality, for instance a machine learning classifier 311, 511 trained to classify facial pictures extracted from a user-generated content video and a machine learning classifier 312, 512 trained to classify voice extracts from a user-generated content voice message or video.

With reference to the system embodiment as illustrated in FIG.5, the first modality machine learning classifier 311 may be a multi-layered network model and its set of training parameters may be stored in local storage 321 as a tensor T₁; the second modality machine learning classifier 312 may be a multi-layered network model and its set of training parameters may be stored in local storage 322 as a tensor T₂; the first modality machine learning classifier 511 may be a multi-layered network model and its set of training parameters may be stored in local storage 521 as a tensor T'₁; the second modality machine learning classifier 512 may be a multi-layered network model and its set of training parameters may be stored in local storage 522 as a tensor T'₂. On the first device, the first modality composite age estimate L₁ and its aggregated confidence level S₁ as calculated by the age estimator 205 may be stored in local memory 331 while the second modality composite age estimate L₂ and its aggregated confidence level S₂ as calculated by the age estimator 205 may be stored in local memory 332. On the second device, the first modality composite age estimate L'₁ and its aggregated confidence level S'₁ may be stored in local memory 531 while the second modality composite age estimate L'₂ and its aggregated confidence level S'₂ may be stored in local memory 532 by the local age estimator 215.

In a possible embodiment, local cross-training from one modality to another may be employed on each device using solely locally stored data such as former rejected samples or subsamples, the previous label estimate and its confidence score for each modality. Thus, on the first device, rejected subsamples from the first modality machine classifier 311 may be used for local re-training of the first modality machine classifier 311 by using the local second modality age estimate L2 as recorded in memory 332, provided that the aggregated confidence level S₂ as recorded in memory 332 is greater than a predetermined threshold *minS₂* This adaptive, run-time training may result into the storage of an updated tensor T₁ in memory 321. Conversely, rejected subsamples from the second modality machine classifier 312 may be used for local re-training of the second modality machine classifier 312 by using the first modality age estimate L₁ as recorded in memory 331, provided that the aggregated confidence level S₁ as recorded in memory 331 is greater than a predetermined threshold *minS₁.* This adaptive, run-time training may result in the storage of an updated tensor T₂ in memory 322. On the second device, rejected subsamples from the first modality machine classifier 511 may be used for local re-training of the first modality machine classifier 511 by using the local second modality age estimate L'2 as recorded in memory 532 provided that the aggregated confidence level S'₂ as recorded in memory 532 is greater than a predetermined threshold *minS₂.* This adaptive, run-time training may result in the storage of an updated tensor T'₁ in memory 521. Conversely, rejected subsamples from the second modality machine classifier 512 may be used for local re-training of the second modality machine classifier 512 by using the local first modality age estimate L'₁ as recorded in memory 531 provided that the aggregated confidence level S₁ as recorded in memory 531 is greater than a predetermined threshold *minS₁.* This adaptive, run-time training may result in the storage of an updated tensor T'₂ in memory 522.

The federated learning system of FIG. 5 also comprises a first federated learning aggregator 551 dedicated to the first modality, hosted in a remote, central server, and a second federated learning aggregator 552 dedicated to the second modality, hosted on the same or a different remote, central server. The first modality federated learning aggregator 551 operates primarily in connection with the corresponding first modality models 311 and 511 as the federated learners respectively on the first and the second devices, and more generally with first modality model federated learners on multiple edge devices (not represented). The second modality federated learning aggregator 552 operates primarily in connection with the corresponding second modality models 312 and 512 as the federated learners respectively on the first and the second devices, and more generally with second modality model federated learners on multiple edge devices (not represented).

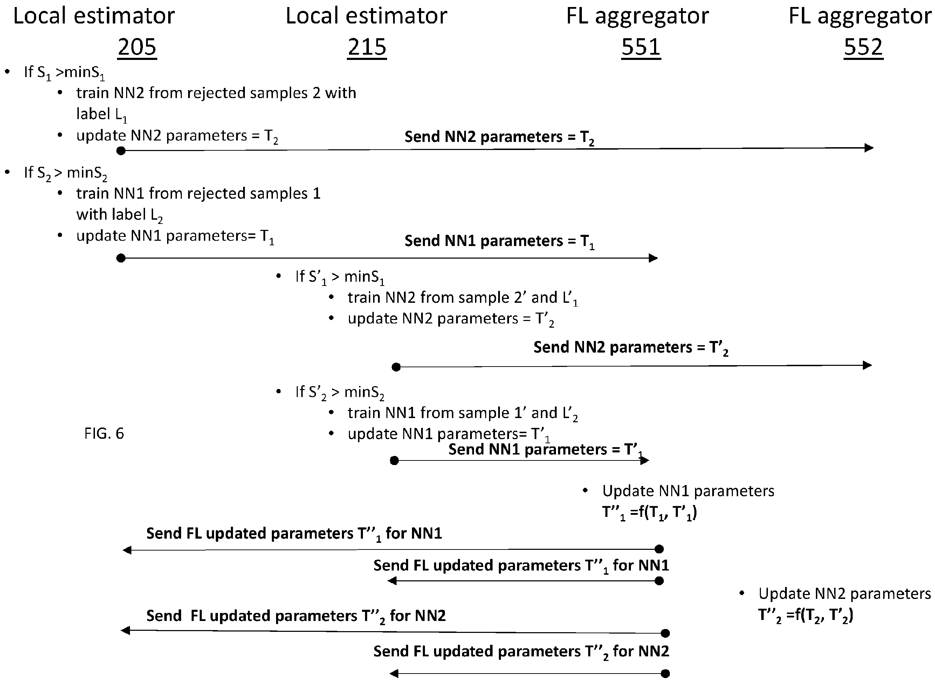

For each modality, it is possible to adapt federated learning systems and methods as described for instance WO2020/185973 for a deep neural network machine learning, but other embodiments are also possible. FIG. 6 describes a possible workflow combining the proposed multi-modal cross-training methods of the edge devices machine learning classifiers 311 and 511, 312 and 512 as the edge devices federated learners with a federated learning architecture comprising several federated learning aggregators 551, 552 (one FL aggregator per modality).

The first edge device local estimator 205 may first update its training parameters tensors T₁, T₂ by locally cross-training each modality classifier with its formerly rejected subsamples as training data, using the label of another modality for which the confidence score is good enough to be trusted as a training example. The local age estimator 205 may retrieve formerly rejected subsamples from the second modality classifier, as well as the first modality age estimate label L₁ as calculated at the same time (preferably, in the same interactive session) as the capture of the rejected subsamples. The local age estimator 205 may compare the recorded first modality confidence score S₁ to a minimum threshold value *minS₁.* If S₁ *> minS₁,* the age estimator 205 may re-train the second modality machine learning classifier 312 with the rejected subsamples, using L₁ as the ground truth label to produce a new set of training parameters as the tensor T₂ in memory 322, using any supervised learning method as known to those skilled in the art of machine learning. The local age estimator 205 may then periodically send the updated training parameters tensor T₂ to the federated learning aggregator 552 that is dedicated to the second modality federated learners for server storage and sharing with other edge devices in the federated learning network.

The local age estimator 205 may further similarly retrieve formerly rejected subsamples from the first modality classifier, as well as the second modality age estimate label L₂ as calculated at the same time as the capture of these rejected subsamples. The local age estimator 205 may compare the recorded second modality confidence score S₂ to a minimum threshold value *minS₂.* If S₂ *> minS_{2,}* the age estimator 205 may re-train the first modality machine learning classifier 311 with the rejected subsamples, using L₂ as the ground truth label to produce a new set of training parameters as the tensor T₁ in memory 321, using any supervised learning method as known to those skilled in the art of machine learning. The local age estimator 205 may then periodically send the updated training parameters tensor T₁ to the federated learning aggregator 551 that is dedicated to the first modality federated learners for server storage and sharing with other edge devices in the federated learning network.

Similarly, the second edge device local estimator 215 may first update its training parameters tensors T'₁, T'₂ by locally cross-training each modality classifier with its formerly rejected subsamples as training data, using the label of another modality for which the confidence score is good enough to be trusted as a training example. The local age estimator 215 may retrieve formerly rejected subsamples from the second modality classifier, as well as the first modality age estimate label L'₁ as calculated at the same time (preferably, in the same interactive session) as the capture of the rejected subsamples. The local age estimator 215 may compare the recorded first modality confidence score S'₁ to a minimum threshold value *minS₁.* If S'₁ *> minS₁,* the local age estimator 215 may re-train its second modality machine learning classifier 512 with the rejected subsamples, using L'₁ as the ground truth label to produce a new set of training parameters as the tensor T'₂ in memory 522, using any supervised learning method as known to those skilled in the art of machine learning. The local age estimator 215 may then periodically send the updated training parameters tensor T'₂ to the federated learning aggregator 552 that is dedicated to the second modality federated learners for server storage and sharing with other edge devices in the federated learning network.

The local age estimator 215 may further similarly retrieve formerly rejected subsamples from its first modality classifier, as well as the second modality age estimate label L'₂ as calculated at the same time as the capture of these rejected subsamples. The local age estimator 215 may compare the recorded second modality confidence score S'₂ to the minimum threshold value *minS₂.* If S_{2'} > *minS₂,* the local age estimator 215 may re-train the first modality machine learning classifier 511 with the rejected subsamples, using L'₂ as the ground truth label to produce a new set of training parameters as the tensor T'₁ in memory 521, using any supervised learning method as known to those skilled in the art of machine learning. The local age estimator 215 may then periodically send the updated training parameters tensor T'₁ to the federated learning aggregator 551 that is dedicated to the first modality federated learners for server storage and sharing with other edge devices in the federated learning network.

The federated learning aggregator 551 may periodically aggregate the modified tensors T₁, T'₁ collected from multiple edge devices to produce a new version T"₁ of the first modality classifier training parameters tensor. The federated learning aggregator 551 may periodically send the new base tensor T"₁ to the edge devices so that the local age estimators 205, 215 update accordingly in local memory 321, 521 the training parameters of their first modality machine learning classifiers 311, 511.

The federated learning aggregator 552 may periodically aggregate the modified tensors T₂, T'₂ collected from multiple edge devices to produce a new version T"₂ of the second modality classifier training parameters tensor. The federated learning aggregator 552 may periodically send the new base tensor T"₂ to the edge devices so that the local age estimators 205, 215 update accordingly in local memory 322, 522 the training parameters of their first modality machine learning classifiers 312, 512.

The proposed methods and systems have a number of advantages over prior art solutions. First, as the age estimator runs only on the local device, it is possible to dynamically adapt the local client application behaviour to to update the age label estimate in real time using locally generated content without the need to send this content out of the local device, so as to be compliant with certain privacy laws and child protection regulations. Second, the age estimate may be automatically updated in real-time for each interactive session, and possibly several times during a single session of the client application. Third, the proposed multimodal architecture with simple classifiers each dedicated to a given modality in combination with the proposed federated learning architecture enables a lightweight implementation of the age estimator on the client device while the classifiers benefit from cross-training each other from the most reliable modalities as may evolve over time and/or experiments. In particular, a better prediction may be obtained over time from the weighted average and confidence of multiple estimations. Fourth, the age estimate may be refined over time taking advantages from federated learning on multiple measurements throughout multiple devices. Federated Learning decentralizes the training process, such that the supervised deep learning training, labelled data of each user will never leave the user's device, for privacy reasons. As opposed to the prior art centralized systems and methods, here all learning and inference parts specific to data of a user are executed on the user's own device. Overall, the proposed systems and methods therefore significantly facilitate the enforcement of privacy protection on the basis of live, private, on-device user attribute analysis out of user-generated content in a seamless way, without requiring unfriendly user configurations and manipulations.

### Other embodiments and applications

While the above detailed description and figures have primarily detailed a possible embodiment of a local age estimator system and methods and the companion federated learning systems and methods for the use of two user content media modalities as inputs to the age estimation in a given session, it is also possible to jointly employ more modalities, for instance a facial recognition extractor, a voice recognition extractor, a text extractor, and/or a haptic motion extractor may be used to analyse three or more modalities out from different video, audio, text and haptic feeds from the user and thus accordingly refine his/her age estimation during a rich multimedia interactive session.

While the above detailed description and figures have primarily detailed a possible embodiment of a local age estimator system and methods comprising local machine learning classifiers for different modalities, they may also be integrated into a more heterogeneous system architecture wherein some extra modalities (e.g. text or haptics) which are not subject to the same user privacy enforcement as the video or audio feeds may still benefit from at least partial server-side content processing methods.

The proposed method and systems to locally estimate the age of a user of a device may also be adapted to estimate other attributes of the user as may be relevant in an interactive session for a specific application. For instance, the presence of some clothing accessories, jewels, hair cuts, glasses, make-up, dental apparels, and/or certain health parameters as may be analysed from the combination of several modalities in an interactive session to estimate an attribute of the end user other than the age, such as the gender, the fashion style preference, or a health parameter (e.g. combination of cough, shortness of breath, shaking voice in audio analysis with skin colour according to oxygenation level, eye redness, pupil dilatation in video analysis or shaking hands, slow response to stimuli in text and/or haptic analysis, measurement of the position of the head of the user at a low height over the ground, etc) while preserving the user privacy in accordance with applicable regulations.

While the above detailed description and figures have primarily detailed a possible embodiment of a local age estimator system and methods and the companion federated learning systems and methods in a given online session between two physical person users through a remote server on the web, the proposed method and systems to locally estimate the age of a user of a device may also be adapted for a local virtual session between a physical person user and a virtual avatar through a remote or a local server such as a Metaverse controller in a Metaverse VR session.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field-programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities.

Although an overview of the inventive subject matter has been described with reference to specific example embodiments, various modifications and changes may be made to these embodiments without departing from the broader spirit and scope of embodiments of the present invention. For example, various embodiments or features thereof may be mixed and matched or made optional by a person of ordinary skill in the art. Such embodiments of the inventive subject matter may be referred to herein, individually or collectively, by the term "invention" merely for convenience and without intending to voluntarily limit the scope of this application to any single invention or inventive concept if more than one is, in fact, disclosed.

The embodiments illustrated herein are believed to be described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present invention. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present invention as represented by the appended claims. The specification and drawings are, accordingly, to be regarded in an illustrative rather than a restrictive sense.

### References

[Peersman, 2011] Peersman, Claudia, Walter Daelemans, and Leona Van Vaerenbergh. "Predicting age and gender in online social networks." Proceedings of the 3rd international workshop on Search and mining user- generated contents. ACM, 2011.
[Morgan-Lopez 2017] Morgan-Lopez, Antonio A., et al. "Predicting age groups of Twitter users based on language and metadata features." PloS one 12.8 (2017): e0183537.
[Rangel 2018] Rangel, Francisco, et al. "Overview of the 6th author profiling task at pan 2018: multimodal gender identification in Twitter." Working Notes Papers of the CLEF (2018).
[Devlin 2018] Devlin, Jacob, et al. "Bert: Pre-training of deep bidirectional transformers for language understanding." arXiv preprint arxiv:1810.04805 (2018).
[Konečný 2016] Konečný, Jakub, et al. "Federated learning: Strategies for improving communication efficiency." arXiv preprint arXiv:1610.05492 (2016).
[Kairouz 2019] Kairouz, Peter, et al. "Advances and Open Problems in Federated Learning." arXiv preprint arXiv:1912.04977 (2019).
[Parkhi, 2015] O.M. Parkhi, A. Vedaldi, A. Zisserman, Deep face recognition, in: British Machine Vision Conference, 2015.
[Sendik, 2019] O. Sendik and Y. Keller, DeepAge: Deep Learning of face-based age estimation, Signal Processing: Image Communication, Volume 78, 2019.
[Zhang, 2019] H. Zhang, X. Geng, Y. Zhang, F. Cheng, Recurrent age estimation, Pattern Recognition Letters, Volume 125, 2019.
[Niu, 2016] Z. Niu, M. Zhou, L. Wang, X. Gao and G. Hua, Ordinal Regression with Multiple Output CNN for Age Estimation, 2016 IEEE Conference on Computer Vision and Pattern Recognition (CVPR), Las Vegas, NV, 2016, pp. 4920-4928.
[Rothe, 2016] R. Rothe, R. Timofte, L. V. Gool, Deep expectation of real and apparent age from a single image without facial landmarks, International Journal of Computer Vision (IJCV), 2016.
[Antipov, 2016] G. Antipov, M. Baccouche, S. Berrani and J. Dugelay, "Apparent Age Estimation from Face Images Combining General and Children-Specialized Deep Learning Models," 2016 IEEE Conference on Computer Vision and Pattern Recognition Workshops (CVPRW), Las Vegas, NV, 2016, pp. 801-809.
[Bahari, 2018] Bahari, Mohamad & McLaren, Mitchell & Van hamme, Hugo & Van Leeuwen, David. (2014). Speaker age estimation using i-vectors. Engineering Applications of Artificial Intelligence. 34. 99-108.
[Chung, 2018] J. S. Chung, A. Nagrani*, A. Zisserman, VoxCeleb2: Deep Speaker Recognition, INTERSPEECH, 2018.
[Ghahremani, 2018] Ghahremani, P., Nidadavolu, P.S., Chen, N., Villalba, J., Povey, D., Khudanpur, S., Dehak, N. (2018) End-to-end Deep Neural Network Age Estimation. Proc. Interspeech 2018
[Sadjadi, 2016] S. O. Sadjadi, S. Ganapathy and J. W. Pelecanos, "Speaker age estimation on conversational telephone speech using senone posterior based i-vectors," 2016 IEEE International Conference on Acoustics, Speech and Signal Processing (ICASSP), Shanghai, 2016, pp. 5040-5044.
[Zazo, 2018] R. Zazo, P. Sankar Nidadavolu, N. Chen, J. Gonzalez-Rodriguez and N. Dehak, "Age Estimation in Short Speech Utterances Based on LSTM Recurrent Neural Networks," in IEEE Access, vol. 6, pp. 22524-22530, 2018.
[Lopez, 2018] M. Bordallo Lopez, A. Hadid, E. Boutellaa, J. Goncalves, V. Kostakos, S. Hosio. Kinship verification from facial images and videos: human versus machine , Machine Vision and Applications (2018) 29: 873.
[Wu, 2019] X. Wu, E. Granger, X. Feng, Audio-Visual Kinship Verification, arXiv.org, 2019.

## Claims

1. A method to estimate on a client device (100,110) an attribute of a user of the client device (100,110), the client device (100,110) comprising at least one processor, a local storage memory, a network connection interface to a remote server, and at least two user interaction components among an audio sensor component, a camera sensor component, a haptic sensor component, a touch-sensitive screen component, a mouse component and a keyboard interface component,
**Characterized in that** the method comprises the steps of:
- Requesting, with the processor through the network connection interface to the remote server (150), the opening of a communication session between a local interactive application client (105, 115) and a remote server application (150);
- Receiving, from the remote server application, a request for an attribute label of the user, said attribute label being selected among the age or the gender of the user;
- Sending, to the remote server application, a locally stored attribute estimate Lₚᵣₑᵥ of the attribute label of the user ;
- Receiving, from the remote server application (150), a request for updating the attribute estimate Lₚᵣₑᵥ during the communication session:
- Capturing a first local signal sample and a second local signal sample of user-generated content from the at least two of the user interaction components(101, 102, 103), the first and second local signal samples being captured respectively from a first signal modality and a second signal modality different from the first signal modality, wherein the first and second signal modalities are selected: from a data stream of the audio sensor component, an audio signal sample, an audio background signal sample, or a user voice signal sample; from a data stream of the camera sensor component, an image sample, a video signal sample, a video background signal sample, a user face video sample, a user body video sample, or a user hand motion pattern sample; from a data stream of the haptic sensor component, a device position, a device orientation, a device motion or a device acceleration sample; from an interface of the touch-sensitive screen component, a user text input sample, a user drawing sample, a finger haptic motion pattern sample; from the mouse component, a user drawing sample or a mouse motion and command pattern sample; from the keyboard interface component, a user text input sample or a user typing pattern sample;
- Predicting from the first local signal sample, with a first neural network NN1 trained for the first signal modality, a first label estimate L₁ for the attribute of the user and a first confidence score S₁;
- Predicting from the second local signal sample, with a second neural network NN2 trained for the second signal modality, a second label estimate L₂ for the attribute of the user and a second confidence score S₂;
- Updating the attribute estimate Lₚᵣₑᵥ as a function of the first label estimate L₁, the second label estimate L₂, the first confidence S₁ and the second confidence score S₂

2. The method of claim 1, wherein predicting from a signal sample a label estimate and a confidence score comprises:
- pre-processing the signal sample into subsamples;
- predicting, with a classifier, a label estimate and a confidence score for the estimated label for each subsample *i*;
- calculating a composite label estimate as the most frequently detected label among the subsamples;
- calculating an aggregated confidence score as the average of confidence levels for the series of subsample estimate values;
- recording the composite label estimate and the aggregated confidence score in local memory (104, 114).

3. The method of claim 2, wherein the composite label estimate is calculated as the statistical MODE or the mean of the series of subsample label estimates.

4. The method of claim 2, wherein the composite label estimate is calculated as the statistical MODE or the mean of the series of subsample label estimates with a confidence score above a threshold of confidence in the series of subsample estimate values.

5. The method of claim 4, further comprising recording in local memory (104, 114) the rejected subsamples for which the label estimates resulted in a confidence score below a predetermined threshold of confidence S₁ₘᵢₙ.

6. The method of any of the preceding claims, wherein the attribute estimate Lₚᵣₑᵥ is updated as an updated attribute estimate L*_{curr}* for the modality with the highest confidence score.

7. The method of claim 6, wherein the attribute estimate Lₚᵣₑᵥ is updated as the updated attribute estimate L*_{curr}* for the modality with the highest confidence score only if this confidence score is above a predefined threshold, or if the average of the composite confidence scores across all modalities is above a predefined threshold.

8. The method of claims 6 or 7, further comprising recording in local memory (104, 114) and/or sending to the local application client (105, 115) the updated attribute estimate L*_{curr}.*

9. The method of claim 5, further comprising re-training a first modality machine learning classifier with the rejected subsamples from this first modality by using the second label estimate L₂ for the second modality as ground truth label if the aggregated confidence score is greater than a predetermined threshold *minS₂,* to produce an updated tensor T₁ as the training parameters for the first modality machine learning classifier.

10. The method of claim 9, further comprising re-training a second modality machine learning classifier with the rejected subsamples from this second modality by using the first label estimate L₁ for the first modality as ground truth label if the aggregated confidence score is greater than a predetermined threshold *minS₁,* to produce an updated tensor T₂ as the training parameters for the second modality machine learning classifier.

11. The method of claim 10, further comprising, for each modality, sending the updated tensor to a federated learning aggregator for this modality on a remote server (150).

12. The method of claim 11, further comprising, for each modality, receiving an aggregated updated tensor from a federated learning aggregator on a remote server and updating the machine learning classifier for this modality with the aggregated updated tensor.

## Patentansprüche

1. Verfahren zum Schätzen, auf einer Clientvorrichtung (100, 110), eines Attributs eines Benutzers der Clientvorrichtung (100, 110), wobei die Clientvorrichtung (100, 110) mindestens einen Prozessor, einen lokalen Speicher, eine Netzverbindungsschnittstelle zu einem entfernten Server und mindestens zwei Benutzerinteraktionskomponenten, ausgewählt aus einer Audiosensorkomponente, einer Kamerasensorkomponente, einer haptischen Sensorkomponente, einer berührungsempfindlichen Bildschirmkomponente, einer Mauskomponente und einer Tastaturschnittstellenkomponente, umfasst,
**dadurch gekennzeichnet, dass** das Verfahren die folgenden Schritte umfasst:
- Anfordern des Öffnens einer Kommunikationssitzung zwischen einem lokalen interaktiven Anwendungsclient (105, 115) und einer entfernten Serveranwendung (150) mittels des Prozessors über die Netzverbindungsschnittstelle bei dem entfernten Server (150);
- Empfangen, von der entfernten Serveranwendung, einer Anforderung für ein Attributlabel des Benutzers, **wobei das Attributlabel aus dem Alter und dem Geschlecht des Benutzers ausgewählt ist**;
- Senden eines **lokal gespeicherten Attributschätzwerts** Lₚᵣₑᵥ für das Attributlabel des Benutzers an die entfernte Serveranwendung;
- Empfangen, von der entfernten Serveranwendung (150), einer Aufforderung zum Aktualisieren des Attributlabel-Schätzwerts Lₚᵣₑᵥ während der Kommunikationssitzung;
- Erfassen einer ersten lokalen Signalprobe und einer zweiten lokalen Signalprobe benutzergenerierten Inhalts von den mindestens zwei Benutzerinteraktionskomponenten (101, 102, 103), wobei die erste und die zweite lokale Signalprobe jeweils aus einer ersten Signalmodalität bzw. einer zweiten Signalmodalität, die sich von der ersten Signalmodalität unterscheidet, erfasst werden, wobei die erste und die zweite Signalmodalität ausgewählt sind: aus einem Datenstrom der Audiosensorkomponente eine Audiosignalprobe, eine Audiohintergrundsignalprobe oder eine Benutzerstimmprobe; aus einem Datenstrom der Kamerasensorkomponente eine Bildprobe, eine Videosignalprobe, eine Videohintergrundsignalprobe, eine Videoprobe des Gesichts des Benutzers, eine Videoprobe des Körpers des Benutzers oder eine Probe eines Handbewegungsmusters des Benutzers; aus einem Datenstrom der haptischen Sensorkomponente eine Probe einer Vorrichtungsposition, einer Vorrichtungsausrichtung, einer Vorrichtungsbewegung oder einer Vorrichtungsbeschleunigung; aus einer Schnittstelle der berührungsempfindlichen Bildschirmkomponente eine Texteingabeprobe des Benutzers, eine Zeichenprobe des Benutzers oder eine Probe eines haptischen Fingerbewegungsmusters; aus der Mauskomponente eine Zeichenprobe des Benutzers oder eine Probe eines Mausbewegungs- und Befehlsmusters; aus der Tastaturschnittstellenkomponente eine Texteingabeprobe des Benutzers oder eine Probe eines Tippmusters des Benutzers;
- Vorhersagen eines ersten Labelschätzwerts L₁ für das Attribut des Benutzers und eines ersten Konfidenzwerts S₁ aus der ersten lokalen Signalprobe mittels eines ersten neuronalen Netzes NN1, das für die erste Signalmodalität trainiert ist;
- Vorhersagen eines zweiten Labelschätzwerts L₂ für das Attribut des Benutzers und eines zweiten Konfidenzwerts S₂ aus der zweiten lokalen Signalprobe mittels eines zweiten neuronalen Netzes NN2, das für die zweite Signalmodalität trainiert ist;
- Aktualisieren des Attributschätzwerts Lₚᵣₑᵥ in Abhängigkeit von dem ersten Labelschätzwert L₁, dem zweiten Labelschätzwert L₂, dem ersten Konfidenzwert S₁ und dem zweiten Konfidenzwert S₂.

2. Verfahren nach Anspruch 1, wobei das Vorhersagen eines Labelschätzwerts und eines Konfidenzwerts aus einer Signalprobe Folgendes umfasst:
- Vorverarbeiten der Signalprobe zu Teilproben;
- Vorhersagen, mittels eines Klassifikators, eines Labelschätzwerts und eines Konfidenzwerts für das geschätzte Label für jede Teilprobe i;
- Berechnen eines zusammengesetzten Labelschätzwerts als das unter den Teilproben am häufigsten erkannte Label;
- Berechnen eines aggregierten Konfidenzwerts als Durchschnitt der Konfidenzniveaus für die Reihe von Schätzwerten der Teilproben;
- Aufzeichnen des zusammengesetzten Labelschätzwerts und des aggregierten Konfidenzwerts im lokalen Speicher (104, 114).

3. Verfahren nach Anspruch 2, wobei der zusammengesetzte Labelschätzwert als statistischer MODUS oder als Mittelwert der Reihe von Labelschätzwerten der Teilproben berechnet wird.

4. Verfahren nach Anspruch 2, wobei der zusammengesetzte Labelschätzwert als statistischer MODUS oder als Mittelwert derjenigen Labelschätzwerte aus der Reihe der Teilproben-Labelschätzwerte berechnet wird, deren Konfidenzwert oberhalb einer Konfidenzschwelle liegt.

5. Verfahren nach Anspruch 4, ferner umfassend das Aufzeichnen der zurückgewiesenen Teilproben, bei denen die Labelschätzwerte zu einem Konfidenzwert unterhalb einer vorbestimmten Konfidenzschwelle S₁ₘᵢₙ geführt haben, im lokalen Speicher (104, 114).

6. Verfahren nach einem der vorhergehenden Ansprüche, wobei der Attributschätzwert Lₚᵣₑᵥ als aktualisierter Attributschätzwert L*_{curr}* für die Modalität mit dem höchsten Konfidenzwert aktualisiert wird.

7. Verfahren nach Anspruch 6, wobei der Attributschätzwert Lₚᵣₑᵥ nur dann als der aktualisierte Attributschätzwert L*_{curr}* für die Modalität mit dem höchsten Konfidenzwert aktualisiert wird, wenn dieser Konfidenzwert oberhalb einer vordefinierten Schwelle liegt oder wenn der Durchschnitt der zusammengesetzten Konfidenzwerte über alle Modalitäten oberhalb einer vordefinierten Schwelle liegt.

8. Verfahren nach Anspruch 6 oder 7, ferner umfassend das Aufzeichnen des aktualisierten Schätzwerts L*_{curr}* im lokalen Speicher (104, 114) und/oder dessen Senden an den lokalen Anwendungsclient (105, 115).

9. Verfahren nach Anspruch 5, ferner umfassend das erneute Trainieren eines Klassifikators für maschinelles Lernen einer ersten Modalität mit den zurückgewiesenen Teilproben aus dieser ersten Modalität unter Verwendung des lokalen Labelschätzwerts L₂ der zweiten Modalität als Ground-Truth-Label, wenn das aggregierte Konfidenzniveau S₂ größer als eine vorbestimmte Schwelle *minS₂* ist, um einen aktualisierten Tensor T₁ als Trainingsparameter für den Klassifikator für maschinelles Lernen der ersten Modalität zu erzeugen.

10. Verfahren nach Anspruch 9, ferner umfassend das erneute Trainieren eines Klassifikators für maschinelles Lernen einer zweiten Modalität mit den zurückgewiesenen Teilproben aus dieser zweiten Modalität unter Verwendung des lokalen Labelschätzwerts L₁ der ersten Modalität als Ground-Truth-Label, wenn das aggregierte Konfidenzniveau S₁ größer als eine vorbestimmte Schwelle *minS₁* ist, um einen aktualisierten Tensor T₂ als Trainingsparameter für den Klassifikator für maschinelles Lernen der zweiten Modalität zu erzeugen.

11. Verfahren nach Anspruch 9 oder 10, ferner umfassend, für jede Modalität, das Senden des aktualisierten Tensors an einen Aggregator für föderiertes Lernen für diese Modalität auf einem entfernten Server (150).

12. Verfahren nach Anspruch 11, ferner umfassend, für jede Modalität, das Empfangen eines aggregierten aktualisierten Tensors von einem Aggregator für föderiertes Lernen auf einem entfernten Server und das Aktualisieren des Klassifikators für maschinelles Lernen dieser Modalität mit dem aggregierten aktualisierten Tensor.

## Revendications

1. Procédé d'estimation, sur un dispositif client (100, 110), d'un attribut d'un utilisateur du dispositif client (100, 110), le dispositif client (100, 110) comprenant au moins un processeur, une mémoire de stockage locale, une interface de connexion réseau à un serveur distant et au moins deux composants d'interaction utilisateur parmi un composant de capteur audio, un composant de capteur de caméra, un composant de capteur haptique, un composant d'écran tactile, un composant de souris et un composant d'interface clavier,
**caractérisé en ce que** le procédé comprend les étapes consistant à :
- demander, au moyen du processeur et par l'intermédiaire de l'interface de connexion réseau, au serveur distant (150), l'ouverture d'une session de communication entre un client local d'application interactive (105, 115) et une application serveur distante (150);
- recevoir, depuis l'application serveur distante, une demande d'étiquette d'attribut de l'utilisateur, **ladite étiquette d'attribut étant sélectionnée parmi l'âge et le genre de l'utilisateur**;
- envoyer, à l'application serveur distante, une **estimation d'attribut stockée localement** Lₚᵣₑᵥ de l'étiquette d'attribut de l'utilisateur;
- recevoir, depuis l'application serveur distante (150), une demande de mise à jour de l'estimation Lₚᵣₑᵥ de l'étiquette d'attribut pendant la session de communication;
- capturer un premier échantillon de signal local et un deuxième échantillon de signal local de contenu généré par l'utilisateur à partir d'au moins deux composants d'interaction utilisateur (101, 102, 103), les premier et deuxième échantillons de signal local étant capturés respectivement à partir d'une première modalité de signal et d'une deuxième modalité de signal différente de la première modalité de signal, les première et deuxième modalités de signal étant sélectionnées : à partir d'un flux de données du composant de capteur audio, un échantillon de signal audio, un échantillon de signal audio d'arrière-plan ou un échantillon de voix de l'utilisateur; à partir d'un flux de données du composant de capteur de caméra, un échantillon d'image, un échantillon de signal vidéo, un échantillon de signal vidéo d'arrière-plan, un échantillon vidéo du visage de l'utilisateur, un échantillon vidéo du corps de l'utilisateur ou un échantillon de motif de mouvement de la main de l'utilisateur; à partir d'un flux de données du composant de capteur haptique, un échantillon de position du dispositif, d'orientation du dispositif, de mouvement du dispositif ou d'accélération du dispositif; à partir d'une interface du composant d'écran tactile, un échantillon de saisie de texte par l'utilisateur, un échantillon de dessin de l'utilisateur ou un échantillon de motif de mouvement haptique d'un doigt; à partir du composant de souris, un échantillon de dessin de l'utilisateur ou un échantillon de motif de mouvement et de commande de souris; à partir du composant d'interface clavier, un échantillon de saisie de texte par l'utilisateur ou un échantillon de motif de frappe de l'utilisateur;
- prédire, à partir du premier échantillon de signal local, au moyen d'un premier réseau neuronal NN1 entraîné pour la première modalité de signal, une première estimation d'étiquette L₁ pour l'attribut de l'utilisateur et un premier score de confiance S₁;
- prédire, à partir du deuxième échantillon de signal local, au moyen d'un deuxième réseau neuronal NN2 entraîné pour la deuxième modalité de signal, une deuxième estimation d'étiquette L₂ pour l'attribut de l'utilisateur et un deuxième score de confiance S₂;
- mettre à jour l'estimation d'attribut Lₚᵣₑᵥ en fonction de la première estimation d'étiquette L₁, de la deuxième estimation d'étiquette L₂, du premier score de confiance S₁ et du deuxième score de confiance S₂.

2. Procédé selon la revendication 1, dans lequel la prédiction, à partir d'un échantillon de signal, d'une estimation d'étiquette et d'un score de confiance comprend les étapes consistant à :
- prétraiter l'échantillon de signal en sous-échantillons;
- prédire, au moyen d'un classificateur, une estimation d'étiquette et un score de confiance pour l'étiquette estimée pour chaque sous-échantillon i;
- calculer une estimation d'étiquette composite comme l'étiquette détectée le plus fréquemment parmi les sous-échantillons;
- calculer un score de confiance agrégé comme la moyenne des niveaux de confiance pour la série de valeurs d'estimation des sous-échantillons;
- enregistrer l'estimation d'étiquette composite et le score de confiance agrégé dans la mémoire locale (104, 114).

3. Le procédé selon la revendication 2, dans lequel l'estimation d'étiquette composite est calculée comme le MODE statistique ou la moyenne de la série des estimations d'étiquette des sous-échantillons.

4. Le procédé selon la revendication 2, dans lequel l'estimation d'étiquette composite est calculée comme le MODE statistique ou la moyenne de la série des estimations d'étiquette des sous-échantillons présentant un score de confiance supérieur à un seuil de confiance dans la série de valeurs d'estimation des sous-échantillons.

5. Le procédé selon la revendication 4, comprenant en outre l'enregistrement, dans la mémoire locale (104, 114), des sous-échantillons rejetés pour lesquels les estimations d'étiquette ont donné lieu à un score de confiance inférieur à un seuil de confiance prédéterminé S₁ₘᵢₙ.

6. Le procédé selon l'une quelconque des revendications précédentes, dans lequel l'estimation d'attribut Lₚᵣₑᵥ est mise à jour sous la forme d'une estimation d'attribut mise à jour L*_{curr}* pour la modalité présentant le score de confiance le plus élevé.

7. Le procédé selon la revendication 6, dans lequel l'estimation d'attribut Lₚᵣₑᵥ est mise à jour sous la forme de l'estimation d'attribut mise à jour L*_{curr}* pour la modalité présentant le score de confiance le plus élevé uniquement si ce score de confiance est supérieur à un seuil prédéfini, ou si la moyenne des scores de confiance composites pour l'ensemble des modalités est supérieure à un seuil prédéfini.

8. Le procédé selon la revendication 6 ou 7, comprenant en outre l'enregistrement de l'estimation mise à jour L*_{curr}* dans la mémoire locale (104, 114) et/ou son envoi au client local d'application (105, 115).

9. Le procédé selon la revendication 5, comprenant en outre le réentraînement d'un classificateur d'apprentissage automatique d'une première modalité à l'aide des sous-échantillons rejetés issus de cette première modalité, en utilisant l'estimation d'étiquette locale L₂ de la deuxième modalité comme étiquette de vérité terrain si le niveau de confiance agrégé S₂ est supérieur à un seuil prédéterminé *minS₂*, afin de produire un tenseur mis à jour T₁ en tant que paramètres d'entraînement du classificateur d'apprentissage automatique de la première modalité.

10. Le procédé selon la revendication 9, comprenant en outre le réentraînement d'un classificateur d'apprentissage automatique d'une deuxième modalité à l'aide des sous-échantillons rejetés issus de cette deuxième modalité, en utilisant l'estimation d'étiquette locale L₁ de la première modalité comme étiquette de vérité terrain si le niveau de confiance agrégé S₁ est supérieur à un seuil prédéterminé *minS₁*, afin de produire un tenseur mis à jour T₂ en tant que paramètres d'entraînement du classificateur d'apprentissage automatique de la deuxième modalité.

11. Le procédé selon la revendication 9 ou 10, comprenant en outre, pour chaque modalité, l'envoi du tenseur mis à jour à un agrégateur d'apprentissage fédéré pour cette modalité sur un serveur distant (150).

12. Le procédé selon la revendication 11, comprenant en outre, pour chaque modalité, la réception d'un tenseur agrégé mis à jour provenant d'un agrégateur d'apprentissage fédéré sur un serveur distant et la mise à jour du classificateur d'apprentissage automatique de cette modalité au moyen du tenseur agrégé mis à jour.
